# EUROPEAN PATENT APPLICATION

(11) **EP 3 087 832 A1**
(43) Date of publication of application: **02.11.2016**
(21) Application number: 16161844.2
(22) Date of filing: 23.03.2016
(51) Int. Cl.: A01K 15/02, A63B 43/00, A63H 33/00

(54) **NOVEL ELECTRONIC TOY BALL FOR PETS**

(30) Priority: 28.04.2015 CN 201510208484
(71) Applicant: Jiangsu Zhongheng Pet Articles Joint Stock Co., Ltd., Yangcheng City 224055 (CN)
(72) Inventor: QIU, Bin, 224055 Yandu New District, Yancheng City Jiangsu Province (CN); XIE, Jin, 224055 Yandu New District, Yancheng City Jiangsu Province (CN)
(74) Representative: 2K Patentanwälte Blasberg Kewitz & Reichel

(57) **Abstract**

The invention relates to a novel electronic toy ball for pets, including symmetric left and right hemispherical wheel sleeves (1, 19), wherein the left and right hemispherical wheel sleeves (1, 19) are supported by left and right hemispherical brackets (2, 18) respectively; the hemispherical brackets (2, 18) are internally provided with main ball brackets (13); a pair of centrosymmetric actuating units are fixedly arranged on the main ball bracket (13); the actuating unit includes a motor (16), the pair of motors (16) drive a front main shaft and a rear main shaft to rotate via transmission gears respectively; the front main shaft and the rear main shaft drive the whole toy ball for pets to roll; the steering of the toy ball for pets is controlled by the rotating speed difference and the rotating direction of the front and rear main shafts; a velometer is further fixedly arranged near the motor for measuring the rotating speed of the motor; an infrared element and a camera lens are fixedly arranged on the main ball bracket and are exposed out of the ball; a pet master remotely controls the rolling direction and speed of the toy ball for pet via portable electronic equipment and remotely controls the camera lens for shooting videos or images.

## Description

### Technical Field

The present invention relates to a toy for pets, and more particularly, to a novel electronic toy ball for pets, which belongs to the technical field of toys for pets.

### Background Art

With the increasing living standards of people, more and more people are fond of raising pets, such as pet dogs and pet cats, etc., which are relatively in favor of ball toys. The existing pet balls have comparatively simple functions, and pet masters cannot control the pet balls; and when the pet is playing with the ball, it is difficult for a master to capture pet close-up while shooting videos or images, and the view of the images or videos is comparatively single.

### Summary of the invention

A technical problem to be solved by the present invention is as follows: the existing pet balls have comparatively simple functions, and pet masters cannot control the pet balls; and when the pet is playing with the ball, it is difficult for a master to capture pet close-up while shooting videos or images, and the view of the images or videos is comparatively single.

The present invention adopts a technical solution as follows.

A novel electronic toy ball for pets includes symmetric left and right hemispherical wheel sleeves 1, 19, wherein the left and right hemispherical wheel sleeves 1, 19 are supported by left and right hemispherical brackets 2, 18 respectively, the hemispherical brackets 2, 18 are internally provided with main ball brackets 13, and a pair of centrosymmetric actuating units are fixedly arranged on the main ball brackets 13; the actuating units comprise motors 16, the pair of motors 16 drive a front main shaft and a rear main shaft to rotate via transmission gears respectively, the front and rear main shafts drive the whole toy ball for pets to roll, the steering of the toy ball for pets is controlled by the rotating speed difference and the rotating direction of the front and rear main shafts, and a velometer 5 is further fixedly arranged near the motor for measuring the rotating speed of the motor; an infrared element 12 and a camera lens are fixedly arranged on the main ball bracket 13 and are exposed out of the ball; a pet master remotely controls the rolling direction and speed of the toy ball for pet via portable electronic equipment and remotely controls the camera lens for shooting videos or images.

Further, the novel electronic toy ball for pets further includes a storage battery, wherein the storage battery is a 6V 1000mA charging lithium battery.

Further, the camera lens is a 720P high-definition camera lens.

Further, the ball body is further provided with a power switch.

Further, the inside of the novel electronic toy ball for pets is made of hard plastic and is provided with a keel for preventing internal electronic equipment from being eaten by a pet dog in case the left and right hemispherical wheel sleeves 1, 19 are damaged; and the hemispherical sleeves are made of TPR and can be dismounted and replaced.

Further, the electronic toy ball for pets is self-provided with a PCB electronic integrated control panel, which remotely enables and controls the motion of the electronic toy ball for pets and the shooting of the camera lens via a mobile phone.

Further, the electronic toy ball for the pets can transmit video images to the mobile phone of the master in real time.

The present invention has the beneficial effects as follows:
1) having attractive appearance and special surface design, wherein the left and right hemispherical wheel sleeves play an excellent role in protection and are easily dismounted and replaced;
2) having good maneuverability, which can move forwards and backwards and steer left and right;
3) being capable of transmitting video images in real time, so that the master can remotely control a self-balancing ball to find the dog thereof at home;
4) having special exterior and interior design, which can safely meet the biting of the pet dog, and can displace roller sleeves with different tastes to attract the interest of the pet dog; and
5) being also a video monitoring equipment for the master to monitor the environment at home in real time, which increases the possibility of interaction between the master and the pet dog remotely.

### Brief Description of the Drawings

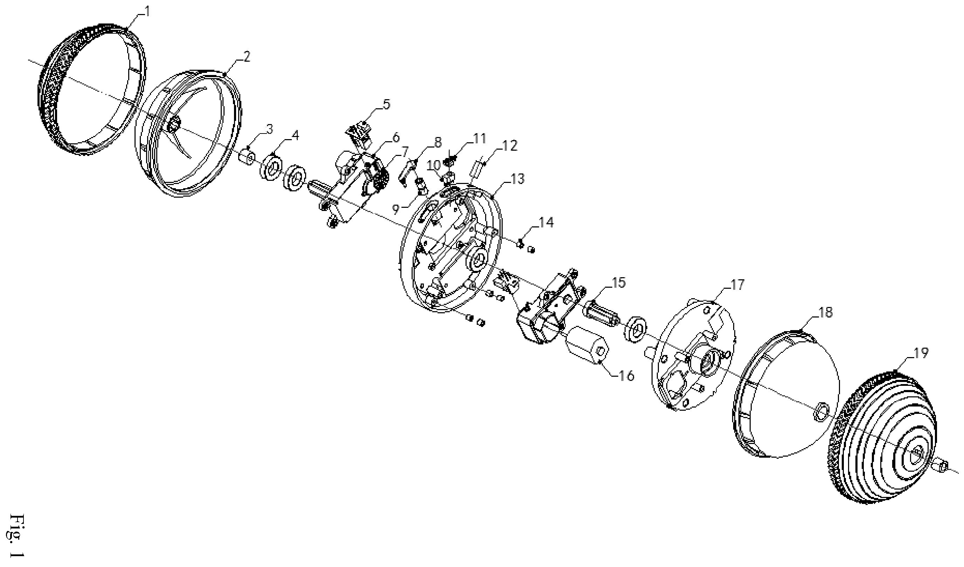

Fig. 1 is an exploded drawing of a novel electronic toy ball for pets according to the invention.

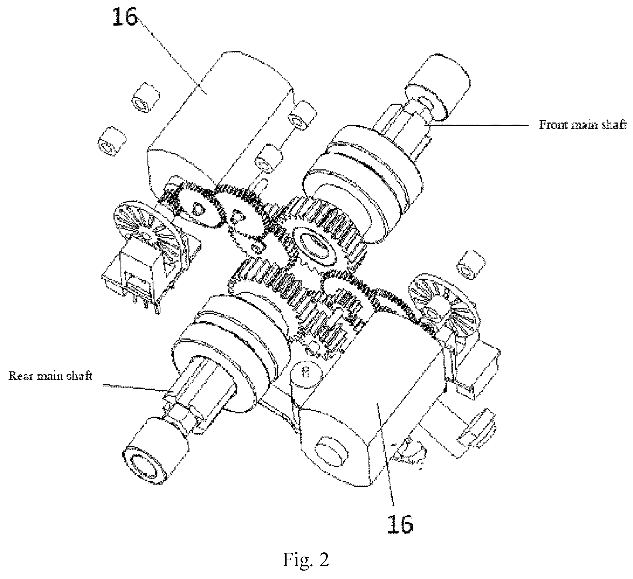

Fig. 2 is a schematic diagram of actuating units inside the novel electronic toy ball for pets according to the invention.
Fig. 3 is a block diagram for a control principle of the novel electronic toy ball for pets according to the invention.

In the Figs, 1 refers to left hemispherical wheel sleeve 1; 2 refers to left hemispherical bracket; 3 refers to ball fixing column; 4 refers to bearing; 5 refers to velometer; 6 refers to driving gearbox; 7 refers to tachometric wheel; 8 refers to DC waterproof cover; 9 refers to DC switch; 10 refers to ON/OFF switch; 11 refers to ON/OFF switch cover; 12 refers to infrared element; 13 refers to main ball bracket; 14. refers to rolling POM bearing; 15 refers to connecting shaft; 16 refers to motor; 17 refers to bracket cover; 18 refers to right hemispherical bracket; and 19 refers to right hemispherical wheel sleeve.

### Detailed Description of the Preferred Embodiments

The present invention will be further descried hereinafter with reference to the specific embodiments and drawings.

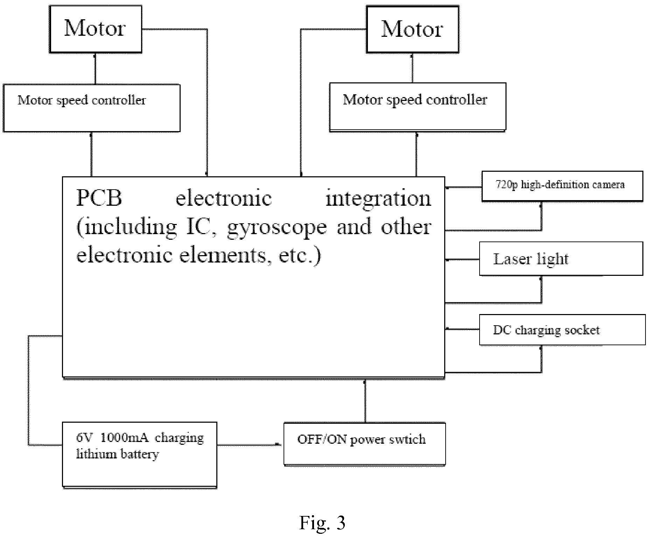

Referring to Fig. 3, the novel electronic toy ball for pets further includes a storage battery, wherein the storage battery is a 6V 1000mA charging lithium battery.

The camera lens is a 720P high-definition camera lens.

The ball body is further provided with a power switch.

The inside of the novel electronic toy ball for pets is made of hard plastic and is provided with a keel for preventing internal electronic equipment from being eaten by a pet dog in case the left and right hemispherical wheel sleeves 1, 19 are damaged; and the hemispherical sleeves are made of TPR and can be dismounted and replaced.

The electronic toy ball for pets is self-provided with a PCB electronic integrated control panel, which remotely enables and controls the motion of the electronic toy ball for pets and the shooting of the camera lens via a mobile phone.

The electronic toy ball for the pets can transmit video images to the mobile phone of the master in real time.

The novel electronic toy ball for pets has attractive appearance and special surface design, wherein the left hemispherical wheel sleeve and the right hemispherical wheel sleeve play an excellent role in protection and are easily dismounted and replaced; has good maneuverability, which can move forwards and backwards and steer left and right; is capable of transmitting video images in real time, so that the master can remotely control a self-balancing ball to find the pet dog thereof at home; having special exterior and interior design, which can safely meet the biting of the pet dog, and can displace roller sleeves with different tastes to attract the interest of the pet dog; and is also a video monitoring equipment for the master to monitor the environment at home in real time, which increases the possibility of interaction between the master and the pet dog remotely.

## Claims

1. A novel electronic toy ball for pets, comprising
symmetric left and right hemispherical wheel sleeves (1, 19), wherein the left and right hemispherical wheel sleeves (1, 19) are supported by left and right hemispherical brackets (2, 18) respectively, the hemispherical brackets (2, 18) are internally provided with main ball brackets (13), and a pair of centrosymmetric actuating units are fixedly arranged on the main ball brackets (13);
the actuating units comprise motors (16), the pair of motors (16) drive a front main shaft and a rear main shaft to rotate via transmission gears respectively, the front and rear main shafts drive the whole toy ball for pets to roll, the steering of the toy ball for pets is controlled by the rotating speed difference and the rotating direction of the front and rear main shafts, and a velometer (5) is further fixedly arranged near the motor for measuring the rotating speed of the motor;
an infrared element (12) and a camera lens are fixedly arranged on the main ball bracket (13) and are exposed out of the ball; and
a pet master remotely controls the rolling direction and speed of the toy ball for pet via portable electronic equipment and remotely controls the camera lens for shooting videos or images.

2. The novel electronic toy ball for pets according to claim 1, wherein further comprising a storage battery, wherein the storage battery is a 6V 1000mA charging lithium battery.

3. The novel electronic toy ball for pets according to claim 1 or 2, wherein the camera lens is a 720P high-definition camera lens.

4. The novel electronic toy ball for pets according to any of the claims 1 to 3, wherein the ball body is further provided with a power switch.

5. The novel electronic toy ball for pets according to any of the claims 1 to 4, wherein the inside of the novel electronic toy ball for pets is made of hard plastic and is provided with a keel for preventing internal electronic equipment from being eaten by a pet dog in case the left and right hemispherical wheel sleeves (1, 19) are damaged; and the hemispherical sleeves are made of TPR and can be dismounted and replaced.

6. The novel electronic toy ball for pets according to any of the claims 1 to 5, wherein the electronic toy ball for pets is self-provided with a PCB electronic integrated control panel, which remotely enables and controls the motion of the electronic toy ball for pets and the shooting of the camera lens via a mobile phone.

7. The novel electronic toy ball for pets according to claim 6, wherein the electronic toy ball for the pets can transmit video images to the mobile phone of the master in real time.
